# EUROPEAN PATENT SPECIFICATION

(11) **EP 1 876 332 B1**
(45) Date of publication and mention of the grant of the patent: **18.05.2011**
(21) Application number: 06728994.2
(22) Date of filing: 13.03.2006
(51) Int. Cl.: F02B 23/06, F02F 3/26, F02M 61/14, F02M 61/18

(54) **DIRECT INJECTION DIESEL ENGINE**
DIESELMOTOR MIT DIREKTEINSPRITZUNG
MOTEUR DIESEL A INJECTION DIRECTE

(30) Priority: 19.04.2005 JP 2005120943
(43) Date of publication of application: 09.01.2008
(73) Proprietor: Yanmar Co., Ltd., Osaka-shi, Osaka 530-0013 (JP)
(72) Inventor: TAKAHASHI, Takeshi, Osaka-shi, Osaka 530-0013 (JP); KAWABE, Takao, Osaka-shi, Osaka 530-0013 (JP); CHINO, Seiji, Osaka-shi, Osaka 530-0013 (JP); YOSHIZUKA, Tooru, Osaka-shi, Osaka 530-0013 (JP)
(74) Representative: Jostarndt, Hans-Dieter
(86) International application number: PCT/JP2006/304929
(87) International publication number: WO 2006/114946

(56) References cited:
- EP-A- 1 469 193
- DE-A1- 3 920 315
- DE-A1- 10 210 976
- JP-A- 2 233 822
- JP-A- 3 202 618
- JP-A- 9 217 626
- JP-A- 02 233 822
- JP-A- 03 202 618
- JP-A- 07 049 032
- JP-A- 09 217 626
- JP-A- 11 013 594
- JP-A- 11 210 468
- JP-A- 2001 165 017
- JP-A- 2001 165 017
- JP-A- 2002 285 848
- JP-A- 2002 285 850
- JP-A- 2002 285 850
- JP-A- 2003 214 297
- JP-B2- 2 560 337
- JP-U- 05 007 502
- JP-U- 58 102 723
- JP-U- 58 102 723
- JP-U- 61 110 835
- JP-U- 61 110 835
- JP-U- 63 140 135
- JP-U- 63 140 135

## Description

### Technical Field

The present invention relates to a direct injection diesel engine. In more detail, the present invention relates to an art reducing influence of the direct injection diesel engine on environment.

### Background Art

Conventional, with regard to a fuel injection nozzle, whole area of nozzle holes of the nozzle is determined corresponding to restriction of injection pressure. One nozzle hole is constructed by a single hole.
There is well known double cone angle (zigzag nozzle holes) which has two types of injection angles of nozzle holes with single nozzle holes (for example, Japanese Patent Laid Open Gazette Hei. 11-13594).
For the purpose that injected fuel and air are mixed efficiently so as to perform good combustion with less smoke, there is well known a construction comprising a cavity formed by a dish-like recess on an upper surface of a piston of an engine, a fuel dispersing element formed by heaping up the center of the cavity, and a fuel injection nozzle facing the cavity and having a plurality of nozzle holes (for example, see Japanese Patent Laid Open Gazette Hei. 11-210468).
Furthermore, German Publication DE 102 10 976 A1 discloses a direct diesel engine comprising a piston, which has an upper recess constituting a cavity and a fuel injection nozzle injecting fuel into the cavity of the piston through nozzle holes. Thereby, the nozzle holes, which have at least a plurality of intersecting points between an axis of the fuel injection nozzle and the opening direction of the nozzle holes, are regarded as a set. A plurality of the sets of the nozzle holes are provided in the fuel injection nozzle.
Japanese Publication No. 02-233822 describes a combustion chamber with polygonal openings in the piston, whereby Japanese Publication No. 03-202618 describes a hole formed at the piston head part of a piston. In this hole a structural wall body is fitted so as to form a combustion chamber of heat insulating structure. Furthermore, the cylinder head is fitted with a flat glow plug which can intrude into the combustion chamber, while a fuel injection nozzle capable of intruding into the combustion chamber is arranged approximately in its center and being eccentric toward the glow plug.
JP 58-102723 U describes a combustion chamber with a polygonal opening in the piston and an inclined fuel injection nozzle.

### Disclosure of Invention

### Problems to Be Solved by the Invention

However, with regard to the conventional fuel injection nozzle, when the nozzle holes are miniaturized, the number of the nozzle holes is increased, whereby over swirl may be caused so as to worsen combustion. At low speed, the increase of the number of the nozzle holes causes the increase of ignition points so as to increase initial combustion amount, whereby combustion noise may be increased. Especially, with regard to an engine which increases a supercharging rate by decreasing compression ratio, combustion noise tends to be worsened.
With regard to the double cone angle, overlapping of atomization by over swirl is reduced by the difference of injection angles. However, with regard to a shallow combustion chamber, the optimum injection timing and distribution of space in the combustion chamber are different so as to cause the reduction of mixing of fuel and air. With regard to a deep combustion chamber, the atomizing range is shortened so that unburnt ingredients such as HC and CO may be increased. Under high load, smoke tends to be increased.
With regard to the art described in Japanese Patent Laid Open Gazette Hei. 11-210468, large thermal load is applied on the fuel dispersing element so that it is difficult to maintain the shape of the fuel dispersing element.
Then, the purpose of the invention is to provide a plurality of nozzle holes on a fuel injection nozzle while suppressing generation of over swirl so as to make atomized fuel to be particles and to increases gaseous phase of atomization.

### Means for Solving the Problems

For solving the above-mentioned problems, the present invention provides below means.
According to the invention, a direct injection diesel engine comprises:
a piston, which has an upper recess constituting a cavity, wherein the cavity is formed as a polygonal combustion chamber opening opened to a combustion chamber, the polygonal combustion chamber opening having five or more corners; and
a fuel injection nozzle having plural sets of nozzle holes for injecting fuel into the cavity of the piston through the nozzle holes, the fuel injection nozzle being inclined from a sliding direction of the piston, wherein in each of the plural sets of nozzle holes, each of the nozzle holes intersects an axis of the fuel injection nozzle at one intersecting point, so that the nozzle holes of each of the sets have at least two intersecting points on the axis of the fuel injection nozzles, and wherein each of the plural sets of nozzle holes includes an upper nozzle hole and a lower nozzle hole disposed on a same longitudinal sectional surface of the fuel injection nozzle. Openings of the upper nozzle holes of all the plural sets of nozzle holes are disposed on a same surface perpendicular to the sliding direction of the piston, and openings of the lower nozzle holes of all the plural sets of nozzle holes are disposed on another same surface perpendicular to a sliding direction of the piston.
Preferably, in each of the plural sets of nozzle holes, the upper nozzle hole and the lower nozzle hole have different diameters or different flow amounts.
Preferably, in each of the plural sets of nozzle holes, the upper nozzle hole and the lower nozzle hole have different injection angles.
Preferably, in each of the plural sets of nozzle holes, the upper nozzle hole and the lower nozzle hole are disposed parallel to each other.
Preferably, each of the nozzle holes of the fuel injection nozzle is formed within a production tolerance.
Preferably, the polygonal shape of the combustion chamber opening is hexagon.
Preferably, a corner of the polygonal shape of the combustion chamber opening, where sides of the polygonal shape intersect each other, is formed in an optional shape.
Preferably, the polygonal shape of the combustion chamber opening is equilateral.
Preferably, a center of the combustion chamber opening is in agreement with a center of the combustion chamber.
Preferably, all sides of the polygonal shape of the combustion chamber opening touch a circle or an ellipse.
Preferably, at least one of sides of the polygonal shape of the combustion chamber opening has no side parallel thereto.
Preferably, a tip of the fuel injection nozzle is directed to a center of the combustion chamber.
Preferably, the opening polygonal shape of the combustion chamber opening is inequilateral.
Preferably, a center of the combustion chamber opening is offset from a center of the combustion chamber.
Preferably, an optionally shaped notch is provided on each side of the polygonal combustion chamber opening.
Preferably, an optionally shaped notch is provided at each corner of the polygonal combustion chamber opening.
Preferably, in each of the plural sets of nozzle holes, the angles of the upper and lower nozzle holes are set so as to widen a gap between openings of the upper and lower nozzle holes.
Preferably, in each of the plural sets of nozzle holes, the angles of the upper and lower nozzle holes are set so as to narrower a gap between openings of the upper and lower nozzle holes.

### Effect of the Invention

According to the present invention, a plurality of nozzle holes can be provided on a fuel injection nozzle while suppressing generation of over swirl.
When whole area of nozzle holes is restricted by injection pressure, compared with a plurality of nozzle holes comprising single nozzle holes, any bad effect by over swirl occurs, gaseous phase of atomization is increased while making atomized fuel to be particles, and fuel is spread so that fuel becomes easy to be ignited and a period of ignition delay is shortened. Accordingly, premixed gas combustion amount is reduced so that pressure raise ratio is decreased and combustion is performed at uniform pressure, whereby cylinder pressure and combustion noise are reduced.
The condition of fuel atomization is made liberal and the state of fuel injection at the optimal condition is partially obtained.
Interference between a plurality of fuel injection holes is avoided and fuel injection characteristic is adjusted by the interference.
A plurality of fuel injection holes are constructed in the limited area of the tip of the fuel injection nozzle, and fuel is atomized while using a space in the vicinity of the fuel injection nozzle effectively.
Fuel is atomized while using a space in the vicinity of the fuel injection nozzle effectively also within production tolerance.
By combining the fuel injection nozzle having a plurality of nozzle holes with the combustion chamber whose rip (amount of overhang) is notched to be a polygon when viewed in section, combustion flame flows out to the top of the piston easily after starting the combustion by fuel injection so as to improve the mixing of fuel with air. Furthermore, flame is generated and grows in the whole combustion chamber with reverse squish generated at the time of fall of the piston, whereby smoke is reduced.
By combining the fuel injection nozzle and the combustion chamber, gaseous phase of atomization is increased so that SOF (Soluble Organic Fraction) such as hydrocarbon and carbon monoxide generated at the time of the retarded angle is reduced, whereby PM (Particulate Matter) is reduced and unburnt ingredients are not increased.
The variation of shape of the opening of the combustion chamber is increased about the same piston so as to deal with various conditions of fuel injection.
The sides constituting the shape of the combustion chamber opening are made touch a circle or an ellipse so as to obtain fixed symmetry, whereby deviated load applied on the piston is canceled.
By arranging the fuel injection nozzle at the center of the combustion chamber, the characteristic of the combustion chamber opening is exhibited easily.
By the positional relation between the combustion chamber and the fuel injection nozzle, the variation of shape of flame flowing to the top of the piston is increased easily.
By the notches at the sides or corners of the combustion chamber opening, combustion flame flows to the top of the piston is increased easily after starting the combustion by fuel injection so as to improve the mixing of fuel with air. Accordingly, pressure raise ratio in the cylinder is decreased and combustion is performed at uniform pressure, whereby combustion noise is reduced. The gushing of combustion flame is adjusted by the shape of the notches. In the case that the notches are provided at the sides and then flame flows, the number of gushing of flame is adjusted by the number of the notches. The size of flame is adjusted by the size and shape of the notches.

### Brief Description of Drawings

[Fig. 1] It is a perspective view partially in section of a direct injection diesel engine.
[Fig. 2] It is a sectional side view of the direct injection diesel engine.
[Fig. 3] It is a lower perspective view of a fuel injection nozzle.
[Fig. 4] It is a sectional side view of the fuel injection nozzle.
[Fig. 5] It is a bottom view of the lower end of the fuel injection nozzle.
[Fig. 6] It is a development of nozzle holes of the fuel injection nozzle.
[Fig. 7] It is a schematic diagram of fuel atomization of the fuel injection nozzle.
[Fig. 8] It is a perspective view of a piston.
[Fig. 9] It is a plan view of the piston.
[Fig. 10] It is an arrow sectional view of the line A-A of the piston.
[Fig. 11] It is a diagram of relation of noise and output against engine rotation speed.
[Fig. 12] It is a diagram of relation of cylinder pressure, rate of heat release and fuel injection timing against crank angle.
[Fig. 13] It is a diagram of relation between PM amount and amounts of hydrocarbon and nitrogen oxide in exhaust gas.
[Fig. 14] It is a diagram of relation between amount of carbon monoxide and amounts of hydrocarbon and nitrogen oxide in exhaust gas.
[Fig. 15] It is a drawing of the nozzle holes.
[Fig. 16] It is a diagram of relation of angle between the nozzle holes and state of atomization.
[Fig. 17] It is a drawing of zigzag arrangement of the nozzle holes.
[Fig. 18] It is a drawing of another construction of the combustion chamber opening.
[Fig. 19] It is a drawing of another construction of the combustion chamber opening shaped hexagonally.
[Fig. 20] It is a drawing of the combustion chamber opening whose corners are rounded off.
[Fig. 21] It is a plan view of the combustion chamber opening which is a polygon touching an ellipse.
[Fig. 22] It is a plan view of the combustion chamber opening in which notches are provided.
[Fig. 23] It is a drawing of the fuel injection nozzle arranged to be inclined.
[Fig. 24] It is a drawing of the fuel injection nozzle to be offset against a combustion chamber.

### Description of Notations

11 a piston
12 a fuel injection nozzle
21 a combustion chamber
32 nozzle holes
51 a combustion chamber opening

### The Best Mode for Carrying out the Invention

The present invention makes combustion of a direct injection diesel engine fine by a plurality of nozzle hole of a fuel injection nozzle and shape of a combustion chamber opening.

### Embodiment 1

### [Entire Construction]

Firstly, explanation will be given on entire construction of a direct injection diesel engine.

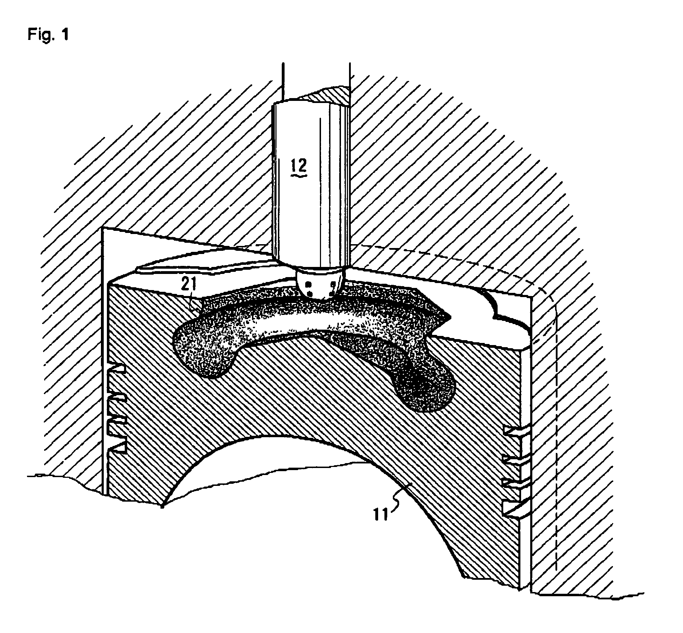

Fig. 1 is a perspective view partially in section of the direct injection diesel engine.

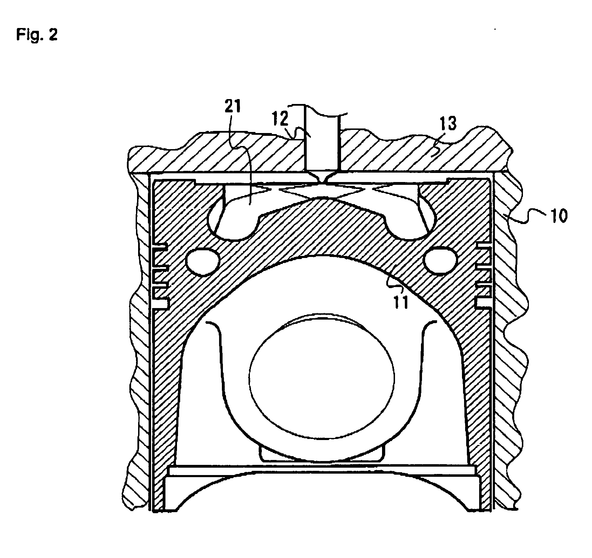

Fig. 2 is a sectional side view of the direct injection diesel engine.
The diesel engine has a cylinder 10, a piston 11, a fuel injection nozzle 12 and a cylinder head 13. The piston 11 is arranged in the cylinder 10 and the piston 11 is slidable in the cylinder 10. The cylinder head 13 is attached to the upper portion of the cylinder 10, and the fuel injection nozzle 12 is attached to the cylinder head 13.
A combustion chamber 21 which is a cavity is constructed on the upper surface of the piston 11, and fuel is atomized to the combustion chamber 21 from the fuel injection nozzle 12. The combustion chamber 21 is positioned at the center of the piston 11 when viewed in plan and is constructed by a concave at the top of the piston 11. The fuel injection nozzle 12 is positioned above the piston 11, at the center of the piston 11 when viewed in plan.
When the piston 11 is at the top dead point, the fuel injection nozzle 12 is at almost the same height as the upper surface of the piston 11. Nozzle holes are provided at the lower end of the fuel injection nozzle 12 and atomized fuel is supplied from the lower end of the fuel injection nozzle 12 to the combustion chamber 21.

### [Nozzle]

Next, explanation will be given on the construction of the fuel injection nozzle.
Herein, the arrangement of the nozzle holes effects on the characteristic of the fuel injection nozzle, and the sucking capacity of the fuel injection nozzle is irrespective thereof.

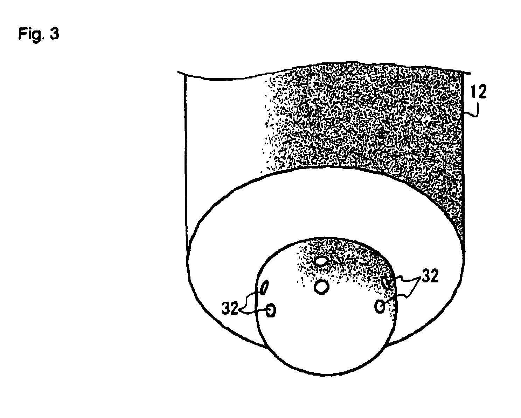

Fig. 3 is a lower perspective view of the fuel injection nozzle.

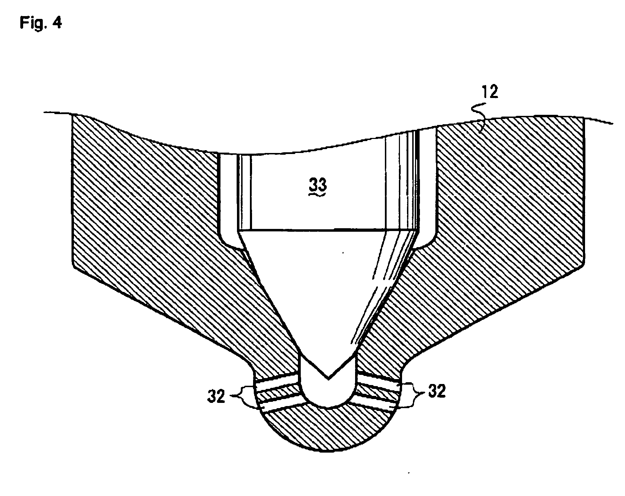

Fig. 4 is a sectional side view of the fuel injection nozzle.

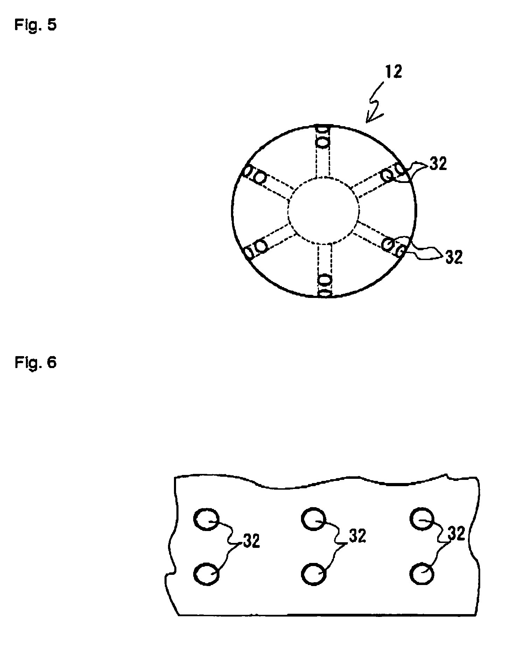

Fig. 5 is a bottom view of the lower end of the fuel injection nozzle.
Fig. 6 is a development of the nozzle holes of the fuel injection nozzle.

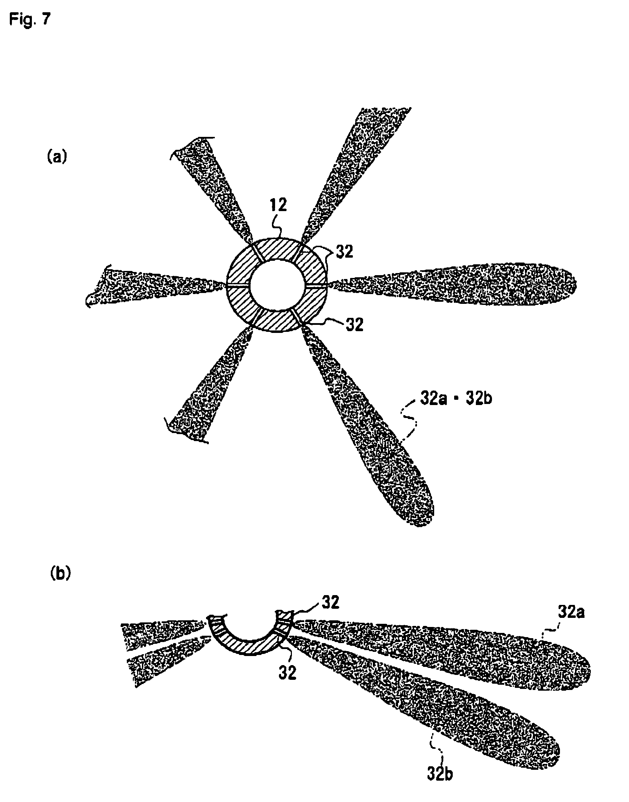

Fig. 7 is a schematic diagram of fuel atomization of the fuel injection nozzle. Fig. 7 (a) is a sectional plan view of the fuel atomizing construction of the fuel injection nozzle. Fig. 7 (b) is a sectional side view of the fuel atomizing construction of the fuel injection nozzle.
A plurality of nozzle holes 32 are provided at the lower tip of the fuel injection nozzle 12 and fuel is atomized from these nozzle holes 32 to the combustion chamber 21. A needle valve 33 is disposed inside the fuel injection nozzle 12 and an oil passage is opened and closed by the vertical slide of the needle valve 33 so as to start and stop the fuel atomization from the nozzle holes.
With regard to the fuel injection nozzle 12, the two nozzle holes 32 provided upper and lower sides are regarded as a pair, and six pairs of the nozzle holes are provided in the construction shown in Fig. 4. Namely, with regard to the fuel injection nozzle 12, the two nozzle holes 32 are disposed in tandem vertically.
The lower end of the fuel injection nozzle 12 is divided into a plurality of divisions which are fan-like shaped when viewed in bottom, and one pair of the nozzle holes 32 is provided in each of the divisions. The nozzle holes 32 of each pair are disposed at regular intervals on the peripheral surface of the lower tip of the fuel injection nozzle 12. With regard to each pair, one of the nozzle holes 32 is positioned lower (inner when viewed in bottom) than the other nozzle hole 32 in the fuel injection nozzle 12. With regard to this construction, one of the nozzle holes 32 of each pair is shifted in height against the other nozzle hole 32. In addition, the openings of the nozzle holes 32 positioned at the lower side of every pair are on the same horizontal plane, and the openings of the nozzle holes 32 positioned at the upper side of every pair are on the same horizontal plane.

With regard to the fuel injection nozzle 12, one pair of the nozzle holes 32 is disposed at the upper and lower sides, and the nozzle holes 32 of each pair is positioned radially from the axis of the fuel injection nozzle 12. The two nozzle holes 32 of the same pair are positioned on the same longitudinal section. As was previously mentioned, with regard to the fuel injection nozzle 12, the two nozzle holes 32 arranged vertically in tandem are regarded as a set, and a plurality of sets are disposed in the fuel injection nozzle 12. The nozzle holes 32 of each set are disposed at regular intervals on the peripheral surface of the lower tip of the fuel injection nozzle 12.
The nozzle holes 32 are arranged substantially in parallel in the fuel injection nozzle 12. Namely, with regard to one pair of the nozzle holes 32, two intersecting points of the longitudinal axis of the fuel injection nozzle 12 and the nozzle holes 32 exist.
By providing the nozzle holes 32 vertically in tandem, fuel injection can be performed with using the upper and lower spaces as shown in Fig. 7. Accordingly, within the limited area of the lower end of the fuel injection nozzle 12, the diameter of each nozzle hole 32 can be reduced and many nozzle holes 32 can be provided. Since fuel is atomized through the nozzle holes with small diameter, the fuel is promoted to be made into particles. Since fuel is atomized through the upper and lower nozzle holes 32, the extent of atomized fuel is enlarged.
Since the two nozzle holes 32 are arranged vertically, fuels 32a and 32b respectively atomized through the two nozzle holes 32 are hardly to interfere with each other, whereby the fuel is kept in the particles easily. Since the fuels 32a and 32b are positioned at the upper and lower sides, the space occupied by atomized fuel is enlarged. Namely, mixing of air and fuel is promoted.
Even if influence of turbulence in the combustion chamber 21 exists, fuels 32a of fuels 32b contiguous to each other are hardly to interfere with each other.
In addition, the effects of such nozzle holes 32 can be obtained by fixed deviation of arrangement of the nozzle holes 32 even if the positioning of the nozzle holes 32 is within the extent of production tolerance.

Since the number of the nozzle holes is increased by providing the nozzle holes at the upper and lower sides as was previously mentioned, bad effects caused by over swirl are reduced compared with the case that the number of the nozzle holes is increased with single nozzle holes. Atomized fuel is made into particles so as to obtain the characteristic that the extent of gaseous phase of atomization is extended.
With regard to the fuel injection nozzle 12, a plurality of nozzle holes 32 are disposed along the longitudinal section and the bored nozzle holes 32 are arranged in tandem. Accordingly, atomized fuel is made into uniform particles so as to reduce soot, and the period of ignition delay is shortened so as to reduce combustion noise widely, whereby the maximum cylinder pressure is reduced and the output is increased widely while the cylinder pressure is not changed so as to make the reduction of combustion noise and the increase of output consist together.
Compared with the single nozzle holes, the tandem arrangement can make the diameter of the nozzle holes smaller so as to make the diameter of atomized particles small. In the case of atomizing the same amount of fuel, the flow velocity of the smaller diameter becomes faster and the diameter of atomized particles is made small.

In addition, the diameter or flow amount of the nozzle holes 32 of the same pair may not be uniform. Accordingly, the characteristic of the pair of nozzle holes comprising a plurality of nozzle holes can be adjusted easily, and the pair of nozzle holes can obtain the characteristic which cannot be constructed by single nozzle hole.
By making the diameter of one of the nozzle holes, the extent of diameter of atomized fuel particles can be adjusted and the shape of atomized fuel spray can be adjusted.

Next, explanation will be given on the piston according drawings.

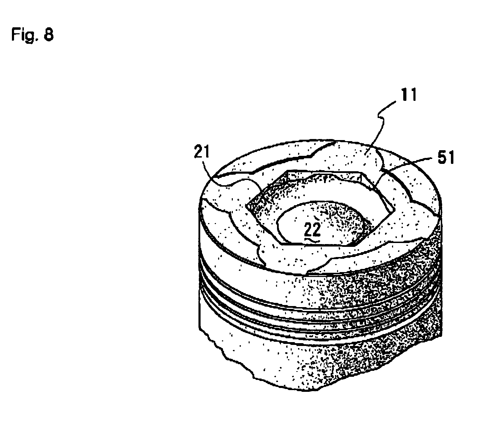

Fig. 8 is a perspective view of the piston.

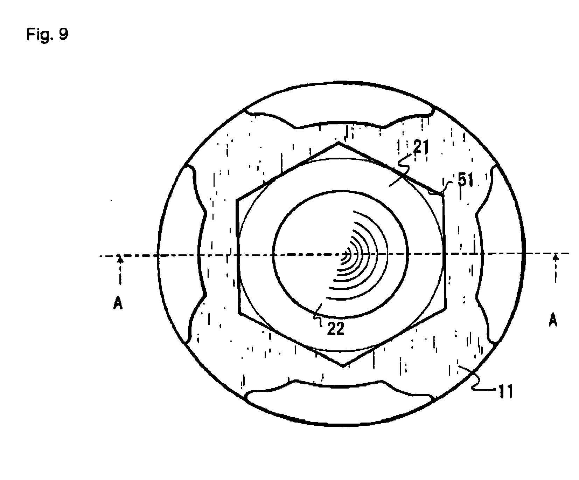

Fig. 9 is a plan view of the piston.

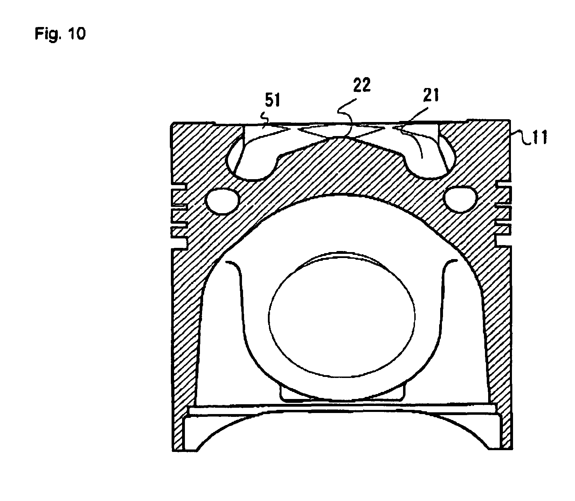

Fig. 10 is an arrow sectional view of the line A-A of the piston.
The upper portion of the piston 11 is cylindrical, and the combustion chamber 21 is constructed at the center of the upper portion of the piston 11. The opening of the combustion chamber 21 constructed in the upper surface of the piston 11 is polygonal when viewed in plan.
A center convex 22 which is conical is constructed at the center of the lower portion of the combustion chamber 21, and the combustion chamber opening 51 is a regular hexagon. The combustion chamber 21 inside the piston 11 is wider than the combustion chamber opening 51. The center of the combustion chamber opening 51 is in agreement with the center of the piston 11.
The combustion chamber 21 comprises a toroidal space provided inside the piston 11 and a space above the center convex 22, and the combustion chamber 21 is communicated with the space inside the cylinder through the combustion chamber opening 51. The center of the toroidal space is in agreement with the center of the piston 11, and an overhanging part is constructed above the toroidal space.

Since the combustion chamber opening 51 is polygonal, the amount of the overhang (lip) is changed linearly at each side of the polygon. Accordingly, with regard to the piston 11, the lip has the extent so as to provide the lip suitable for the combustion condition at each side.
Since the corners of the polygon of the combustion chamber opening 51 are cut, combustion flame moves to the top of the piston 11 from the combustion chamber 21 easily. Accordingly, the mixing with air is improved and flame is disturbed and developed over the whole combustion chamber 21 with reverse squish generated at the time that the piston 11 brings the effect, whereby smoke is reduced.
Since the obtuse-angled parts exist at the corners of the combustion chamber opening 51, the opening at the corner is large when viewed in plan so as to reduce the resistance of gushing combustion flame. Since the corners are obtuse-angled, when an air current flows to the corners, the air is led sideward easily, whereby the disturbance and development of flame are made easy.

With regard to this embodiment, the number of the corners of the combustion chamber opening 51 is six, which is the same as the fuel atomizing directions of the fuel injection nozzle 12. Each of the corners is 120° evenly and the distance between the center of the piston 11 and each of the corners is equal to each other. Accordingly, the resistance of combustion flame gushing from the combustion chamber 21 is reduced so as to make the gushing of flame easy and not to obstruct the disturbance and development of flame in the combustion chamber 21.
The combustion chamber opening 51 has the six corners and sides with the same condition at regular intervals, whereby the combustion chamber 21 with handy characteristic is obtained.

### [Noise and Output]

The noise and output against engine rotation speed per unit time of the direct injection diesel engine having the fuel injection nozzle and the piston 11 constructed as mentioned above is measured.

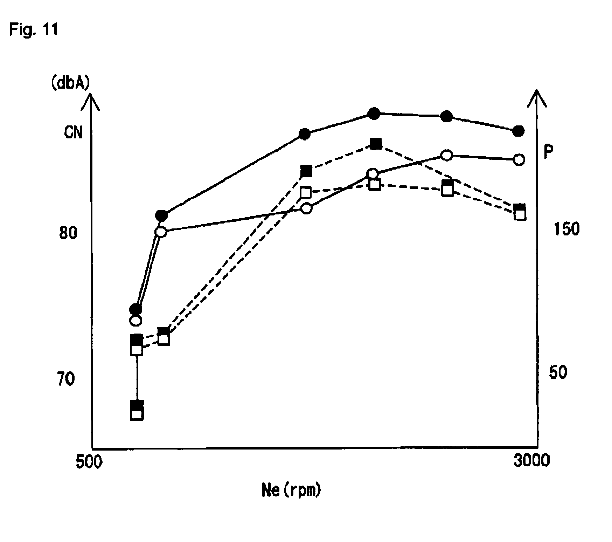

Fig. 11 is a diagram of relation of the noise and output against engine rotation speed.
A conventional fuel injection nozzle has six single holes at regular intervals. A conventional piston has a circular combustion chamber opening, and the center of the combustion chamber opening is in agreement with the center of the piston.
The axis of ordinates at the left indicates volume of noise CN and the unit thereof is dbA. The axis of ordinates at the right indicates engine output P and the unit thereof is Nm. The axis of abscissas indicates engine rotation speed per unit time Ne and the unit thereof is rpm.
The measurements of the noise and output are compared with each other at the same torque.

Firstly, explanation will be given on the engine noise.
In Fig. 11, black circles indicate the conventional fuel injection nozzle and piston, and outlined circles indicate the fuel injection nozzle and piston of this embodiment.
According to the result of the measurement, compared with the conventional construction, the noise is reduced widely at the extents of middle and high rotation speeds.

Next, explanation will be given on cylinder pressure of the engine.
In Fig. 11, black squares indicate the conventional fuel injection nozzle and piston, and outlined squares indicate the fuel injection nozzle and piston of this embodiment.
With regard to the cylinder pressure, stable pressure characteristic is obtained, and the maximum pressure of an engine of the same type is reduced. Accordingly, the output can be improved by supercharging or the like, whereby the output can be improved while maintaining stable engine characteristic at the extents of middle and high rotation speeds.

Accordingly, with regard to the same specification of the engine, by changing the injection nozzle and the shape of the combustion chamber opening of the piston, the noise is reduced widely at the same torque. The maximum combustion pressure can be increased to the allowable internal pressure, and by increasing the supercharging pressure, the torque and output can be improved.

### [Cylinder Pressure, Rate of Heat Release and Fuel Injection Timing against Crank Angle]

Next, explanation will be given on the results of cylinder pressure, rate of heat release and fuel injection timing against crank angle compared with the conventional construction.

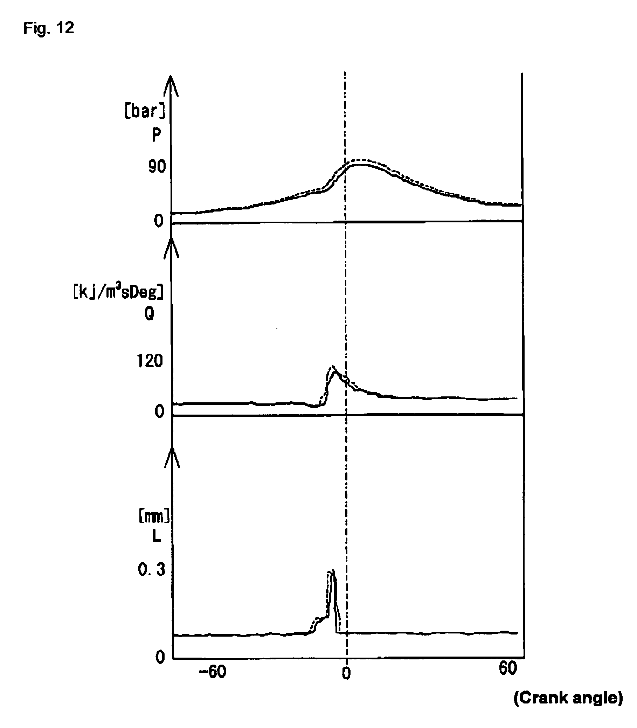

Fig. 12 is a diagram of relation of cylinder pressure, rate of heat release and fuel injection timing against crank angle.
Dotted lines indicate the conventional fuel injection nozzle and piston, and full lines indicate the fuel injection nozzle and piston of this embodiment. The graphs show the cylinder pressure, rate of heat release and fuel injection timing respectively in the order from top to bottom.
With regard to the cylinder pressure, the axis of ordinates indicates average pressure P in the cylinder and the unit thereof is bar.
With regard to the rate of heat release, the axis of ordinates indicates average rate of heat release in the cylinder and the unit thereof is kj/m³Deg.
With regard to the fuel injection timing, the axis of ordinates indicates lift amount of the needle valve 33 and the unit thereof is mm. The axis of abscissas indicates the crank angle and the unit thereof is deg.

As shown in Fig. 12, the maximum values of cylinder pressure and rate of heat release are reduced. The fuel injection timing is shifted to be retarded. The extent of time in which the rate of heat release is high is expanded. Compared with the conventional construction at the same fuel injection timing, the rate of heat release is inactive and the cylinder pressure is reduced widely.
According to these results, the maximum combustion pressure can be increased to the allowable internal pressure of the cylinder of the engine, and by increasing the supercharging pressure, the torque and output can be improved.
Since the fuel injection timing is shifted to be retarded, the fuel injection timing can be shifted to be advanced further. Accordingly, fuel consumption is reduced and the engine output can be increased by the advance. Furthermore, The generation of smoke can be reduced while reducing NOₓ by the retard.

Synergistically with the effect of reduction of combustion noise and smoke by the fuel injection nozzle 12, it is found that the same effect can be obtained by the combustion chamber 21. In addition to the effect of the fuel injection nozzle 12, by making the opening of the combustion chamber 21 polygonal, a plurality of notched parts are provided at the rip of the combustion chamber so that combustion flame tends to move to the top of the piston after starting the combustion by the injection, whereby smooth combustion in the combustion chamber is obtained. Since the obstruction of air current in the combustion chamber is reduced, the mixing of fuel with air is improved. Since flame is disturbed in the combustion chamber and grows in the cylinder when the piston 11 falls, the generation of smoke is reduced.
Since the maximum rate of heat release is reduced, NOₓ is reduced.

### [Characteristic of Exhaust Gas]

Next, explanation will be given on the characteristic of exhaust gas of the diesel engine of this embodiment.
With regard to the diesel engine of this embodiment, PM amount and amounts of carbon monoxide, hydrocarbon and nitrogen oxide are measured.

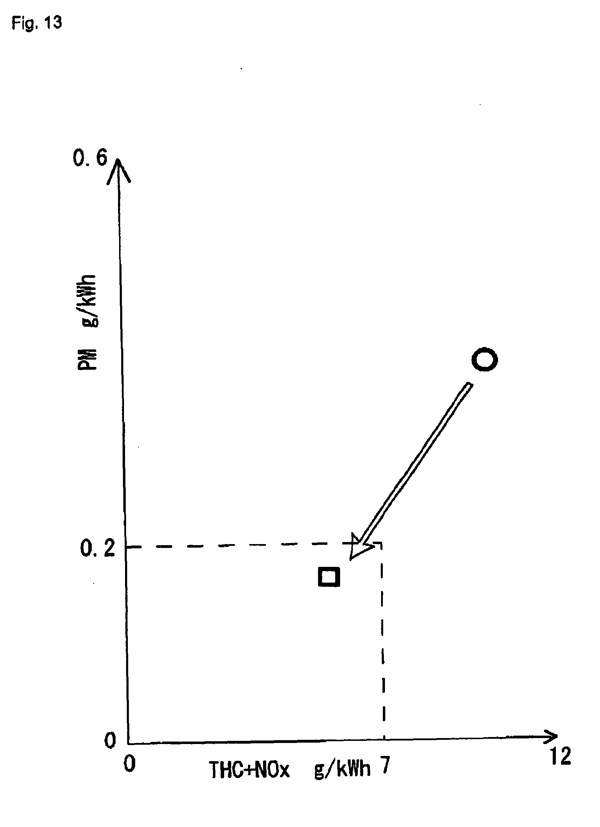

Fig. 13 is a diagram of relation between PM amount and amounts of hydrocarbon and nitrogen oxide in exhaust gas.

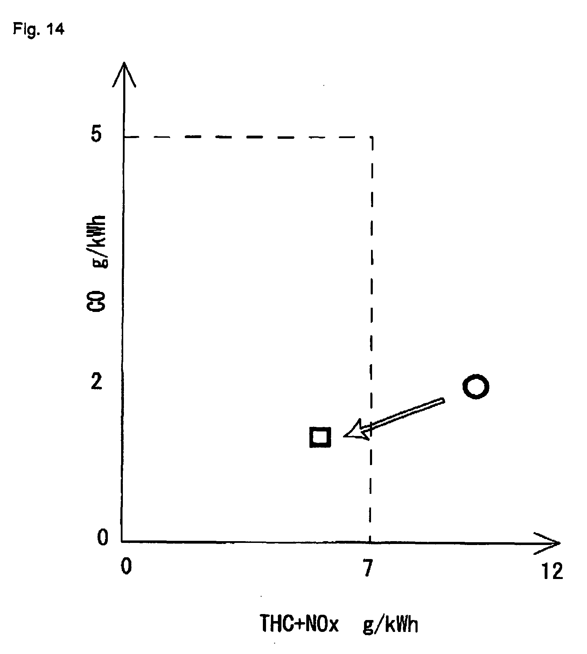

Fig. 14 is a diagram of relation between amount of carbon monoxide and amounts of hydrocarbon and nitrogen oxide in exhaust gas.
Circles indicate the conventional fuel injection nozzle and piston, and squares indicate the fuel injection nozzle and piston of this embodiment.
In Fig. 13, the axis of ordinates indicates the PM amount per unit time, and the axis of abscissas indicates the sum of amounts of total hydrocarbon and NOₓ. In Fig. 14, the axis of ordinates indicates the amount of carbon monoxide per unit time, and the axis of abscissas indicates the sum of amounts of total hydrocarbon and NOₓ. Both in Figs. 13 and 14, the unit thereof is g/kWh.
As shown in Figs. 13 and 14, compared with the conventional engine, the PM amount is improved widely. The amounts of carbon monoxide, total hydrocarbon and nitrogen oxide are also improved.
The combination of the fuel injection nozzle 12 and the combustion chamber 21 shown in this embodiment increases the gaseous phase of atomization and reduces SOF such as HC and CO generally generated at the side of the retard, whereby PM is reduced and unburnt fuel is not increased.

### [Embodiment 2]

Next, explanation will be given on another construction of the fuel injection nozzle.
Two fuel injection nozzles 32 are disposed vertically so as to be radial or convergent, whereby the characteristic of atomized fuel can be adjusted.

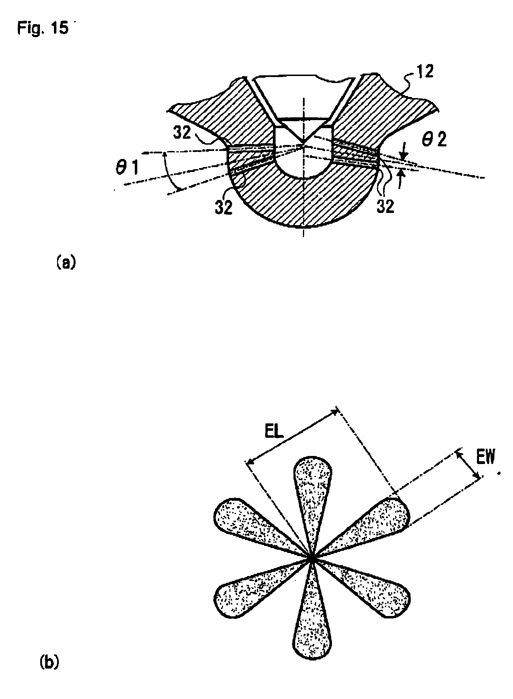

Fig. 15 is a drawing of the nozzle holes. Fig. 15a shows the sectional view of the fuel injection nozzle, and Fig. 15b is a drawing of measured parts of length and width of injected fuel.

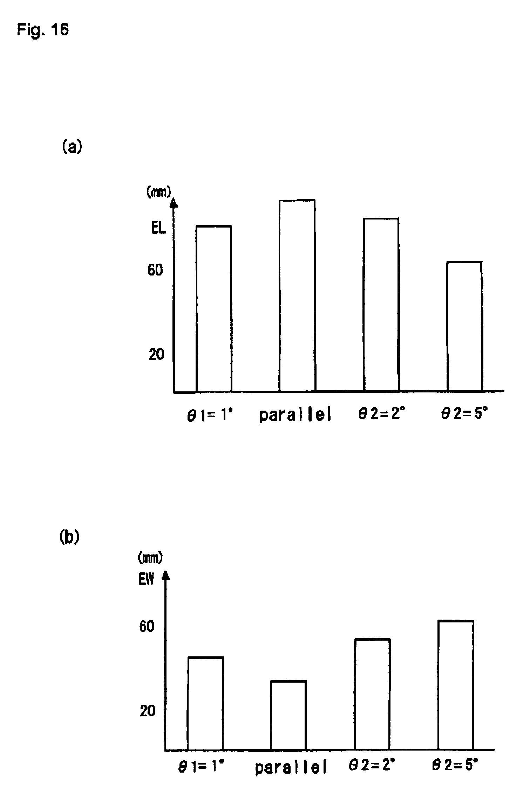

Fig. 16 is a diagram of relation of angle between the nozzle holes and state of atomization. Fig. 16a is a diagram of variation of length of atomization, and Fig. 16b is a diagram of variation of width of atomization.
The state of fuel atomization against the angle between the fuel injection nozzles 32 disposed vertically is measured. The state of fuel atomization is measured by measuring the length EL and the width EW.
The states of fuel atomization are measured respectively in the case that the nozzle holes 32 are radial and the angle θ1 is 1°, the case that the nozzle holes 32 are in parallel to each other, the case that the nozzle holes 32 are convergent and the angle θ2 is 2° and the case that the angle θ2 is 5°. In addition, in the case that θ1 is 1°, number of an intersecting point between the extension of each nozzle hole 32 and the longitudinal axis of the fuel injection nozzle 12 is one. In the case that the nozzle holes 32 are in parallel to each other, the case that the angle θ2 is 2° and the case that the angle θ2 is 5°, the number of the intersecting point is two. The angle between each of the nozzle holes 32 and the direction of the plane is about within the extent from 80° to 70°.

As shown in Fig. 16, according to the results of the measurement, the length EL becomes shorter in the order of the case of parallel, the case that θ1 is 1°, the case that θ2 is 2° and the case that θ2 is 5°. The width EW becomes wider in the order of the case of parallel, the case that θ1 is 1°, the case that θ2 is 2° and the case that θ2 is 5°.
Accordingly, by adjusting the angle between the nozzle holes 32 in tandem, the length and width of the atomization can be adjusted.
Therefore, the angle between the nozzle holes 32 is adjusted corresponding to the characteristics of the piston and the like so as to obtain fine combustion. With regard to one fuel injection nozzle 12, the arrangement of each pair of the nozzle holes 32 may be the same, or the nozzle holes arranged radially, the nozzle holes arranged parallel and the nozzle holes arranged convergently may be combined.

The nozzle holes 32 are not limited to the arrangement on the same vertical plane, and one of the nozzle holes 32 may be offset against the other nozzle hole 32.

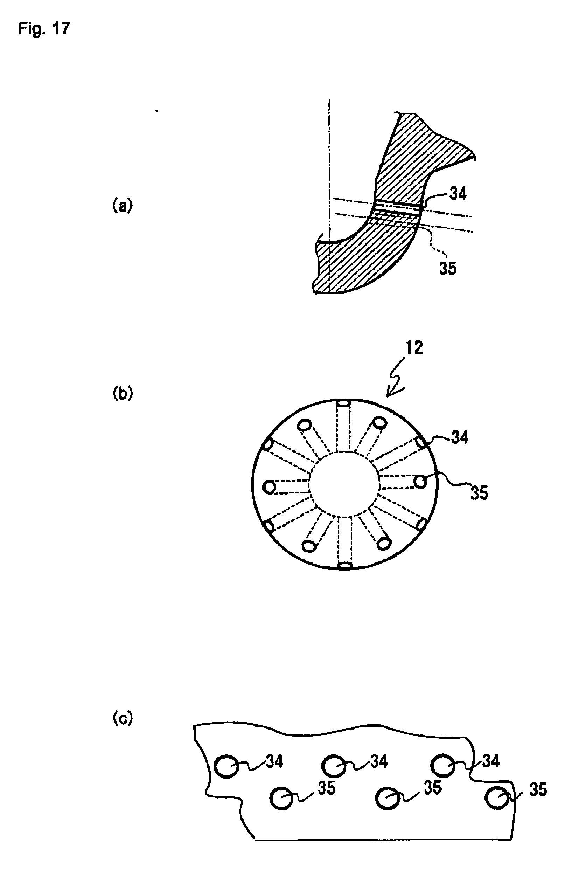

Fig. 17 is a drawing of zigzag arrangement of the nozzle holes. Fig. 17a is a sectional side view of the fuel injection nozzle, Fig. 17a is a bottom view of the fuel injection nozzle, and Fig. 17a is a development of the nozzle holes.
As shown in Fig. 17, nozzle holes 34 and 35 are provided in the fuel injection nozzle 12. The nozzle holes 35 are provided at the lower side of the lower end of the fuel injection nozzle 12, and the nozzle holes 34 are provided at the upper side thereof. The nozzle holes 34 and 35 are arranged zigzag when viewed in plan. According to this construction, the distance between the nozzle holes 34 and 35 in the vertical direction is shorten so as to increase the combustion volume and to miniaturize the fuel injection nozzle 12.
With regard to the zigzag arrangement of the nozzle holes 34 and 35, each of the nozzle holes 35 between two nozzle holes 34 may be arranged closely to one of the two nozzle holes 34 so as to enhance the interfere between the nozzle holes 34 and 35.

### [Embodiment 3]

Next, explanation will be given on another construction of the combustion chamber opening 51 of the piston 11.

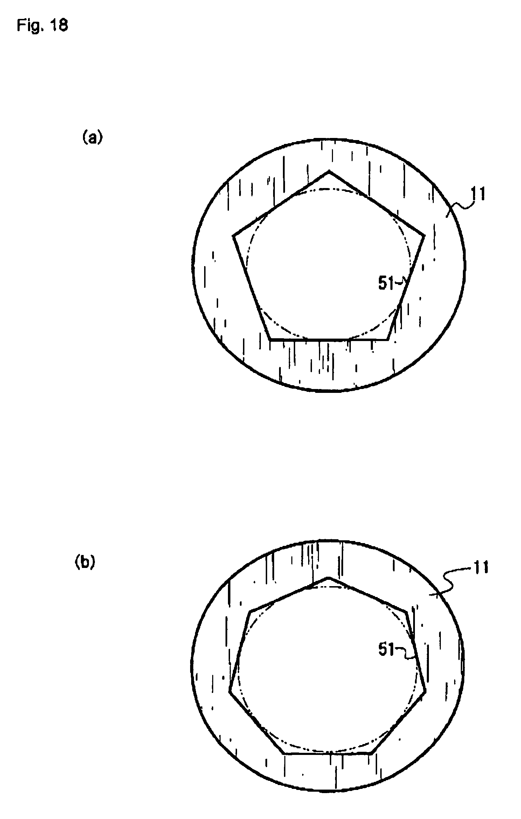

Fig. 18 is a drawing of another construction of the combustion chamber opening. Fig. 18a is a plan view of the combustion chamber opening shaped to be a regular pentagon, and Fig. 18b is a plan view of the combustion chamber opening shaped to be a regular heptagon.
The combustion chamber opening 51 is constructed polygonal so as to comprise corner parts at which the rip is small and side parts in which the amount of rip varies linearly. Furthermore, by making the number of corners of the combustion chamber opening 51 not less than five, the angle of each corner is larger than 90° when viewed in plan so as not to prevent the flow out of flame from the combustion chamber and the disturbance in the combustion chamber.
The pentagonal combustion chamber opening 51 shown in Fig. 18a is shaped to be a regular pentagon and the center of the combustion chamber opening 51 is in agreement with the center of the piston 11. The heptagonal combustion chamber opening 51 shown in Fig. 18b is shaped to be a regular heptagon and the center of the combustion chamber opening 51 is in agreement with the center of the piston 11. The number of the corner of the pentagonal combustion chamber is less than that of the hexagonal combustion chamber so that the number of discharged flame is less. The number of the corner of the heptagonal combustion chamber is more than that of the hexagonal combustion chamber so that the number of discharged flame is more.

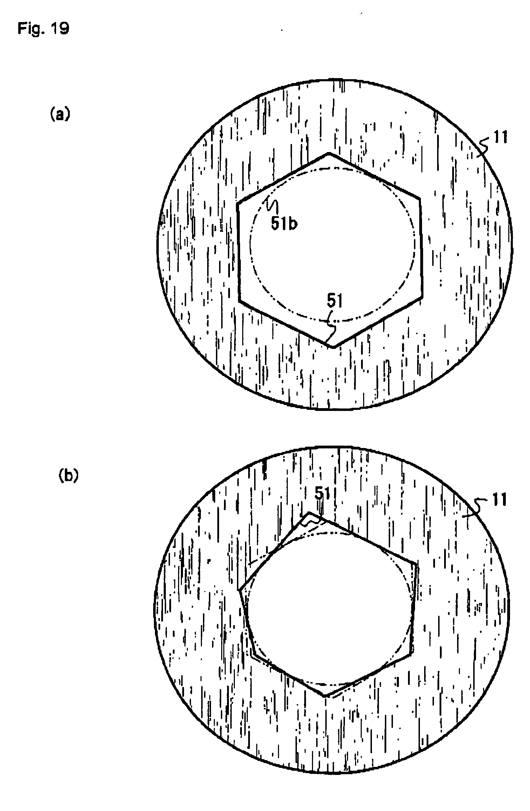

Fig. 19 is a drawing of another construction of the combustion chamber opening shaped hexagonally. Fig. 19a is a plan view of the offset combustion chamber opening, and Fig. 19b is a plan view of the combustion chamber opening which is an inequilateral hexagon.
In Fig. 19a, a center of a circle 51 b is in agreement with that of the piston 11 and touches the inner side of one of the sides of the combustion chamber opening 51. As shown in Fig. 19a, the center of the area of the combustion chamber opening 51 is offset against the center of the piston 11. Accordingly, the rips of the corners of the combustion chamber opening 51 are unequal to each other so as to provide a plurality of conditions of flame discharge at the combustion chamber opening 51. Also, the inequilateral hexagon shown in Fig. 19b provides a plurality of conditions of flame discharge at the combustion chamber opening 51.
Accordingly, the combustion chamber with liberal condition of flame discharge is constructed, whereby the combustion characteristic can be adjusted easily. As was previously mentioned, at least one pair of opposite sides of the combustion chamber opening is not parallel, whereby the combustion chamber with liberal condition of flame discharge is constructed.

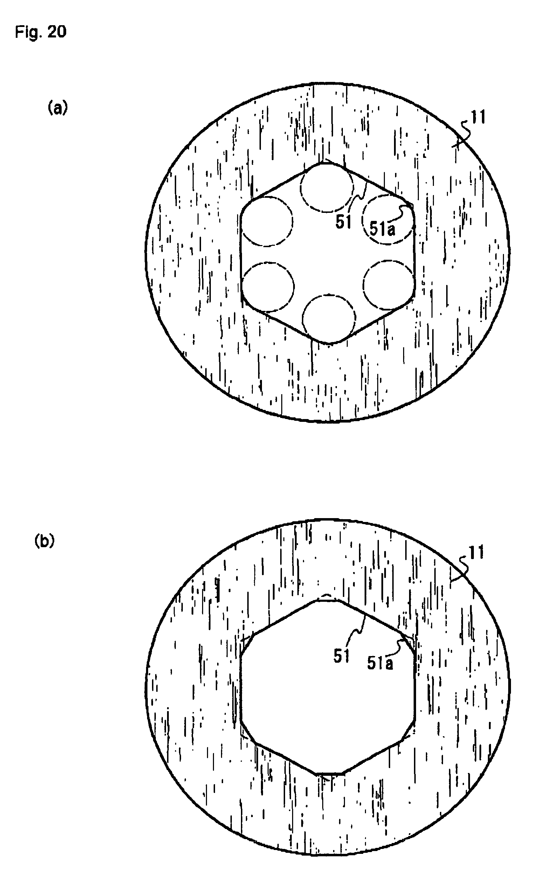

Fig. 20 is a drawing of the combustion chamber opening whose corners are rounded off. Fig. 20a is a drawing of the case that the corners are curved, and Fig. 20a is a drawing of the case that the corners are straight.
As shown in Fig. 20a, each of the corners 51a of the combustion chamber opening 51 is curved so that flame flowing out from the combustion chamber is guided smoothly to the upper portion of the piston 11, whereby disturbance of flame is performed smoothly.
As shown in Fig. 20b, each of the corners 51 a of the combustion chamber opening 51 may be straight. By making the corners 51a straight, the characteristic of the combustion chamber can be improved while reducing the cost for forming the piston 11.
Accordingly, the sides of the polygon may be connected to each other at the crossing part thereof with optional shape so as to adjust the characteristic of the combustion chamber opening 51.

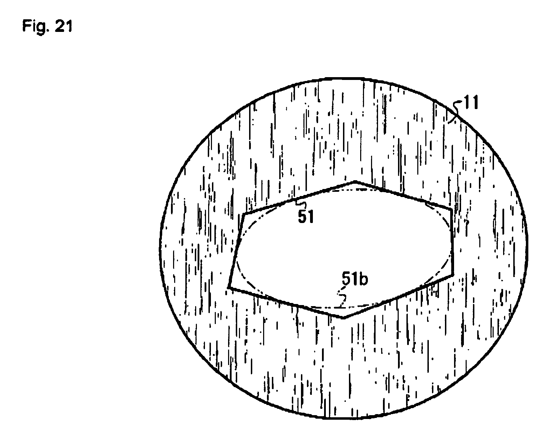

Fig. 21 is a plan view of the combustion chamber opening which is a polygon touching an ellipse.
As shown in Fig. 21, the combustion chamber opening 51 may be a polygon in which an ellipse 51 b is inscribed. The center of the ellipse 51 b is in agreement with the center of the piston 11, and the combustion chamber opening 51 is constructed to be a hexagon in which the ellipse 51b is inscribed.
By constructing the combustion chamber opening 51 as mentioned above, three types of the corners having different characteristics are constructed, and the corners having the same characteristics are point-symmetric about the piston 11 as a center. The sides of the combustion chamber opening 51 are similar thereto. Namely, by making the combustion chamber opening 51 to be a polygon touching an ellipse, the combustion chamber opening 51 having a plurality of characteristics and fixed symmetry is constructed. Since the corners or sides having the same characteristics are symmetric about the piston 11 as the center, deviated load is hardly applied on the piston 11 so that load applied on the piston 11 is reduced.

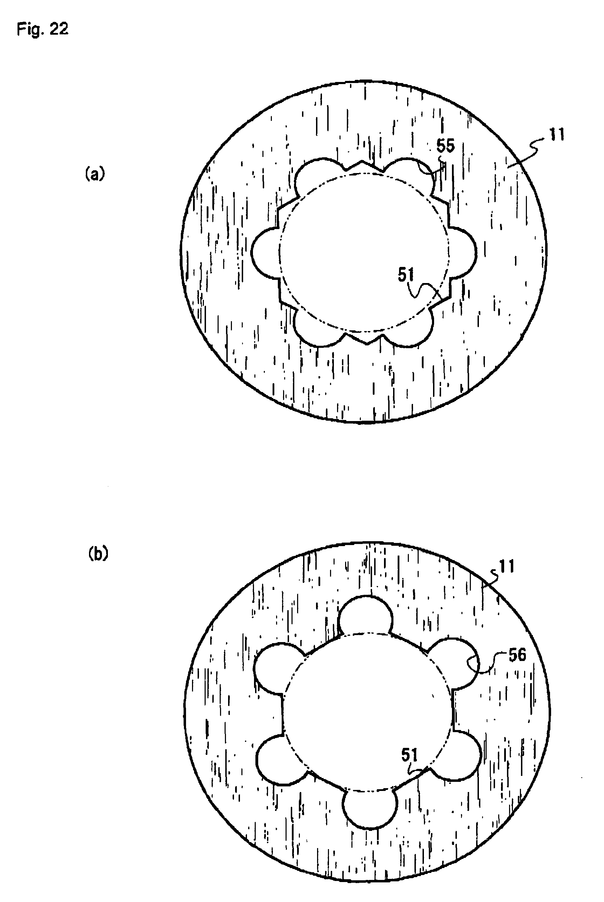

Fig. 22 is a plan view of the combustion chamber opening in which notches are provided. Fig. 22a is a plan view of the construction that the notches are provided in the sides, and Fig. 22b is a plan view of the construction that the notches are provided at the vertexes of the polygon.
In the construction shown in Fig. 22a, a notch 55 is provided in each of the sides of the hexagon. The notches 55 are semicircular.
By providing the notches 55 in the sides of the hexagon as mentioned above, the number of flame flowing out from the combustion chamber 21 is increased so as to promote smooth combustion.
The notches may be constructed at optional positions of the sides of the polygon, and the shape of the notches when the upper surface of the combustion chamber opening 51 is viewed is optional. By providing the notches, the flow-out parts of flame can be constructed at optional positions so as to adjust the combustion characteristic of the piston 11 easily.

In the construction shown in Fig. 22b, a notch 56 is provided at each of the vertexes of the hexagon. The notches 56 are semicircular.
By providing the notches 56 at the vertexes of the hexagon as mentioned above, flowing out of flame from the combustion chamber 21 is made smooth.
The notches may be constructed at optional positions of the vertexes of the polygon, and the shape of the notches when the upper surface of the combustion chamber 21 is viewed is optional. By providing the notches, the flow-out parts of flame can be constructed at optional positions so as to adjust the combustion characteristic of the piston 11 easily.

### [Embodiment 4]

Next, explanation will be given on another embodiment of arrangement of the fuel injection nozzle.

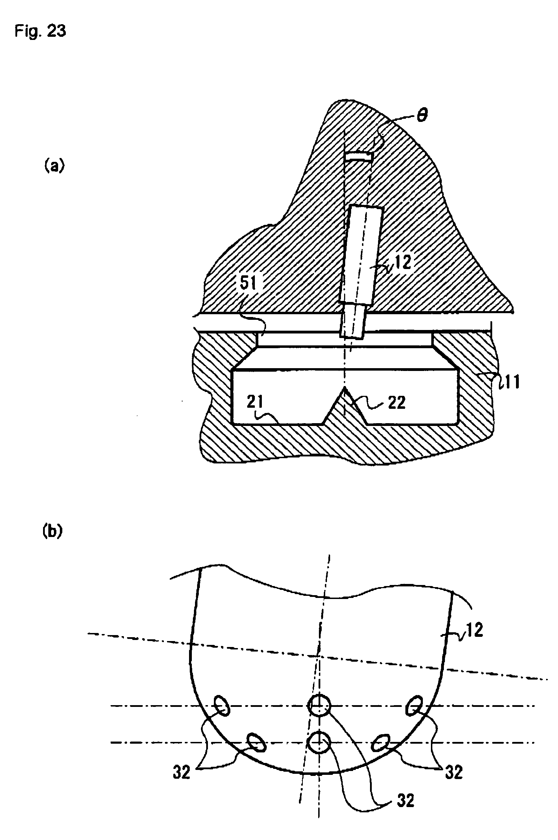

Fig. 23 is a drawing of the fuel injection nozzle arranged to be inclined. Fig. 23a is a sectional side view of the arrangement of the fuel injection nozzle, and Fig. 23b is a side view of the lower end of the fuel injection nozzle.
In this embodiment, the fuel injection nozzle 12 is disposed to be inclined against the slide direction of the piston 11, and is inclined for an angle θ in Fig. 23. The tip of the fuel injection nozzle 12 is directed to the center convex 22 at the center of the combustion chamber 21. In addition, the angle θ is within an extent, which permits fuel supply by the fuel injection nozzle 12, and is adjusted suitably corresponding to the combustion characteristic.
The nozzle holes 32 are disposed in tandem at the tip of the fuel injection nozzle 12. The nozzle holes 32 disposed at the lower side are positioned on a surface perpendicular to the slide direction of the piston 11, and the nozzle holes 32 disposed at the upper side are also positioned on a surface perpendicular to the slide direction of the piston 11. The nozzle holes 32 disposed at the lower side and the nozzle holes 32 disposed at the upper side are shifted to each other in the direction of height.
By constructing the fuel injection nozzle 12 as mentioned above, fuel can be atomized uniformly to the combustion chamber 21 regardless of the arrangement of the fuel injection nozzle 12. Since the extended direction of the fuel injection nozzle 12 crosses the center of the combustion chamber, the space above the cylinder 10 can be used effectively.
When the nozzle holes 32 are disposed on a surface perpendicular to the extended direction of the fuel injection nozzle 12, the combustion condition of each corner of the combustion chamber opening 51 is different to each other so that the combustion characteristic is liberal. Namely, by adjusting the angle θ, the injection angle of fuel to the piston 11 is adjusted so as to adjust the combustion characteristic.

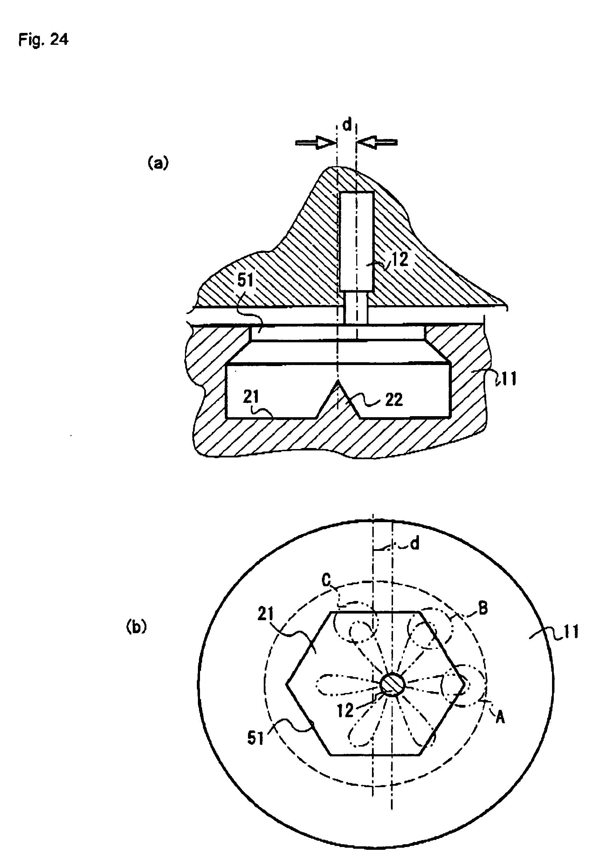

Fig. 24 is a drawing of the fuel injection nozzle to be offset against a combustion chamber. Fig. 24a is a sectional side view of the arrangement of the fuel injection nozzle, and Fig. 24b is a plan view of the same.
As shown in Fig. 24, the fuel injection nozzle 12 is shifted sideward from the center of the piston 11 and the center of the combustion chamber 21 for a distance d.
By offsetting the fuel injection nozzle 12 against the combustion chamber 21 as mentioned above, the positional relation between the fuel injection nozzle 12 and each of the corners or sides of the combustion chamber opening 51 is unequal. Accordingly, the state of fuel induced into each corner is difficult to each other so that the state of air and fuel at the corners of the combustion chamber opening 51 is liberal, whereby the engine with liberal combustion characteristic is constructed. In addition, the distance d is set so as to position the fuel injection nozzle 12 inside the combustion chamber opening 51. Mainly, by setting the distance d not more than the radius of the center convex 22, fuel is injected to the whole inside of the combustion chamber 21 while adjusting the combustion condition.

## Claims

1. A direct injection diesel engine comprising
a piston (11), which has an upper recess constituting a cavity (21), wherein the cavity (21) is formed as a polygonal combustion chamber opening (51) opened to a combustion chamber (21), the polygonal combustion chamber opening (51) having five or more corners; and
a fuel injection nozzle (12) having plural sets of nozzle holes (32) for injecting fuel into the cavity (21) of the piston (11) through the nozzle holes (32), the fuel in that the injection nozzle (12) being inclined from a sliding direction of the piston (11), **characterized in** each of the plural sets of nozzle holes (32), each of the nozzle holes (32) intersects an axis of the fuel injection nozzle (12) at one intersecting point, so that the nozzle holes (32) of each of the sets have at least two intersecting points on the axis of the fuel injection nozzle, wherein each of the plural sets of nozzle holes (32) includes an upper nozzle hole (32) and a lower nozzle hole (32) disposed on a same longitudinal sectional surface of the fuel injection nozzle (12), and wherein
openings of the upper nozzle holes (32) of all the plural sets of nozzle holes (32) are disposed on a same surface perpendicular to the sliding direction of the piston (11), and openings of the lower nozzle holes (32) of all the plural sets of nozzle holes (32) are disposed on another same surface perpendicular to a sliding direction of the piston (11).

2. The direct injection diesel engine as set forth in claim 1, wherein, in each of the plural sets of nozzle holes (32), the upper nozzle hole (32) and the lower nozzle hole (32) have different diameters or different flow amounts.

3. The direct injection diesel engine as set forth in claim 1, wherein, in each of the plural sets of nozzle holes (32), the upper nozzle hole (32) and the lower nozzle hole (32) have different injection angles.

4. The direct injection diesel engine as set forth in claim 1, wherein in each of the plural sets of nozzle holes (32), the upper nozzle hole and the lower nozzle hole are disposed parallel to each other.

5. The direct injection diesel engine as set forth in claim 1, wherein each of the nozzle holes (32) of the fuel injection nozzle (12) is formed within a production tolerance.

6. The direct injection diesel engine as set forth in claim 1, wherein the polygonal shape of the combustion chamber opening (51) is hexagon.

7. The direct injection diesel engine as set forth in claim 1 or 6, wherein a corner of the polygonal shape of the combustion chamber opening (51), where sides of the polygonal shape intersect each other, is formed in an optional shape.

8. The direct injection diesel engine as set forth in claim 1 or 6, wherein the polygonal shape of the combustion chamber opening (51) is equilateral.

9. The direct injection diesel engine as set forth in claim 1 or 6, wherein a center of the combustion chamber opening (51) is in agreement with a center of the combustion chamber (21).

10. The direct injection diesel engine as set forth in claim 1 or 6, wherein all sides of the polygonal shape of the combustion chamber opening (51) touch a circle or an ellipse.

11. The direct injection diesel engine as set forth in claim 1 or 6, wherein at least one of sides of the polygonal shape of the combustion chamber opening (51) has no side parallel thereto.

12. The direct injection diesel engine as set forth in claim 1 or 6, wherein a tip of the fuel injection nozzle (12) is directed to a center of the combustion chamber (21).

13. The direct injection diesel engine as set forth in claim 1 or 6, wherein the opening polygonal shape of the combustion chamber opening (51) is inequilateral.

14. The direct injection diesel engine as set forth in claim 1 or 6, wherein a center of the combustion chamber opening (51) is offset from a center of the combustion chamber (21).

15. The direct injection diesel engine as set forth in claim 1 or 6, wherein an optionally shaped notch (55) is provided on each side of the polygonal combustion chamber opening (51).

16. The direct injection diesel engine as set forth in claim 6, wherein an optionally shaped notch (56) is provided at each corner of the polygonal combustion chamber opening (51).

17. The direct injection diesel engine as set forth in claim 3, wherein, in each of the plural sets of nozzle holes (32), the angles of the upper and lower nozzle holes (32) are set so as to widen a gap between openings of the upper and lower nozzle holes (32).

18. The direct injection diesel engine as set forth in claim 3, wherein, in each of the plural sets of nozzle holes (32), the angles of the upper and lower nozzle holes (32) are set so as to narrower a gap between openings of the upper and lower nozzle

## Patentansprüche

1. Dieselmotor mit Direkteinspritzung, der umfasst:
einen Kolben (11), der eine obere Aussparung aufweist, die einen Hohlraum (21) bildet, wobei der Hohlraum (21) als eine mehreckige Verbrennungskammeröffnung (51) gebildet ist, die zu einer Verbrennungskammer (21) geöffnet ist, wobei die mehreckige Verbrennungskammeröffnung (51) fünf oder mehr Ecken aufweist; und
eine Kraftstoffeinspritzdüse (12), die mehrere Sätze von Düsenlöchern (32) zum Einspritzen von Kraftstoff in den Hohlraum (21) des Kolbens (11) durch die Düsenlöcher (32) aufweist, wobei die Kraftstoffeinspritzdüse (12) gegenüber einer Gleitrichtung des Kolbens (11) geneigt ist, **dadurch gekennzeichnet, dass** in jedem der mehreren Sätze von Düsenlöchern (32) jedes der Düsenlöcher (32) eine Achse der Kraftstoffeinspritzdüse (12) an einem Schnittpunkt schneidet, sodass die Düsenlöcher (32) jedes der Sätze mindestens zwei Schnittpunkte auf der Achse der Kraftstoffeinspritzdüse aufweisen, wobei jeder der mehreren Sätze von Düsenlöchern (32) ein oberes Düsenloch (32) und ein unteres Düsenloch (32) enthält, die auf einer selben Längsschnittfläche der Kraftstoffeinspritzdüse (12) angeordnet sind, und wobei die Öffnungen der oberen Düsenlöcher (32) aller der mehreren Sätze von Düsenlöchern (32) auf einer selben Oberfläche senkrecht zu der Gleitrichtung des Kolbens (11) angeordnet sind und wobei die Öffnungen der unteren Düsenlöcher (32) aller der mehreren Sätze von Düsenlöchern (32) auf einer anderen selben Fläche senkrecht zu einer Gleitrichtung des Kolbens (11) angeordnet sind.

2. Dieselmotor mit Direkteinspritzung nach Anspruch 1, bei dem in jedem der mehreren Sätze von Düsenlöchern (32) das obere Düsenloch (32) und das untere Düsenloch (32) unterschiedliche Durchmesser oder unterschiedliche Strömungsmengen aufweisen.

3. Dieselmotor mit Direkteinspritzung nach Anspruch 1, bei dem in jedem der mehreren Sätze von Düsenlöchern (32) das obere Düsenloch (32) und das untere Düsenloch (32) unterschiedliche Einspritzwinkel aufweisen.

4. Dieselmotor mit Direkteinspritzung nach Anspruch 1, bei dem in jedem der mehreren Sätze von Düsenlöchern (32) das obere Düsenloch und das untere Düsenloch parallel zueinander angeordnet sind.

5. Dieselmotor mit Direkteinspritzung nach Anspruch 1, bei dem jedes der Düsenlöcher (32) der Kraftstoffeinspritzdüse (12) innerhalb einer Herstellungstoleranz gebildet ist.

6. Dieselmotor mit Direkteinspritzung nach Anspruch 1, bei dem die mehreckige Form der Verbrennungskammeröffnung (51) sechseckig ist.

7. Dieselmotor mit Direkteinspritzung nach Anspruch 1 oder 6, bei dem eine Ecke der mehreckigen Form der Verbrennungskammeröffnung (51), bei der sich die Seiten der mehreckigen Form schneiden, in einer optionalen Form gebildet ist.

8. Dieselmotor mit Direkteinspritzung nach Anspruch 1 oder 6, bei dem die mehreckige Form der Verbrennungskammeröffnung (51) gleichseitig ist.

9. Dieselmotor mit Direkteinspritzung nach Anspruch 1 oder 6, bei dem eine Mitte der Verbrennungskammeröffnung (51) in Übereinstimmung mit einer Mitte der Verbrennungskammer (21) steht.

10. Dieselmotor mit Direkteinspritzung nach Anspruch 1 oder 6, bei dem alle Seiten der mehreckigen Form der Verbrennungskammeröffnung (51) einen Kreis oder eine Ellipse berühren.

11. Dieselmotor mit Direkteinspritzung nach Anspruch 1 oder 6, bei dem mindestens eine der Seiten der mehreckigen Form der Verbrennungskammeröffnung (51) keine Seiten parallel dazu aufweist.

12. Dieselmotor mit Direkteinspritzung nach Anspruch 1 oder 6, bei dem eine Spitze der Kraftstoffeinspritzdüse (12) zu einer Mitte der Verbrennungskammer (21) gerichtet ist.

13. Dieselmotor mit Direkteinspritzung nach Anspruch 1 oder 6, bei dem die mehreckige Form der Öffnung der Verbrennungskammeröffnung (51) ungleichseitig ist.

14. Dieselmotor mit Direkteinspritzung nach Anspruch 1 oder 6, bei dem eine Mitte der Verbrennungskammeröffnung (51) gegenüber einer Mitte der Verbrennungskammer (21) versetzt ist.

15. Dieselmotor mit Direkteinspritzung nach Anspruch 1 oder 6, bei dem auf jeder Seite der mehreckigen Verbrennungskammeröffnung (51) eine optional geformte Aussparung (55) vorgesehen ist.

16. Dieselmotor mit Direkteinspritzung nach Anspruch 6, bei dem in jeder Ecke der mehreckigen Verbrennungskammeröffnung (51) eine optional geformte Aussparung (56) vorgesehen ist.

17. Dieselmotor mit Direkteinspritzung nach Anspruch 3, bei dem in jedem der mehreren Sätze von Einspritzdüsen (32) die Winkel der oberen und der unteren Düsenlöcher (32) so eingestellt sind, dass sie einen Zwischenraum zwischen den Öffnungen der oberen und der unteren Düsenlöcher (32) verbreitern.

18. Dieselmotor mit Direkteinspritzung nach Anspruch 3, bei dem in jedem der mehreren Sätze von Düsenlöchern (32) die Winkel der oberen und der unteren Düsenlöcher (32) so eingestellt sind, dass sie einen Zwischenraum zwischen den Öffnungen der oberen und der unteren Düsenlöcher (32) verengen.

## Revendications

1. Moteur diesel à injection directe comprenant :
un piston (11) qui possède un évidement supérieur constituant une cavité (21), dans lequel la cavité (21) est formée en tant qu'ouverture de chambre de combustion polygonale (51) ouverte vers une chambre de combustion (21), l'ouverture de chambre de combustion polygonale (51) ayant cinq coins ou plus ; et
un injecteur de carburant (12) ayant plusieurs ensembles de trous d'injection (32) pour injecter du carburant dans la cavité (21) du piston (11) à travers les trous d'injection (32), l'injecteur de carburant (12) étant incliné depuis une direction de coulissement du piston (11), **caractérisé en ce que** dans chacun des ensembles de trous d'injection (32), chacun des trous d'injection (32) coupe un axe de l'injecteur de carburant (12) en un point d'intersection, de sorte que les trous d'injection (32) de chacun des ensembles ont au moins deux points d'intersection sur l'axe de l'injecteur de carburant, dans lequel chacun des ensembles de trous d'injection (32) inclut un trou d'injection supérieur (32) et un trou d'injection inférieur (32) disposés sur une même surface en coupe longitudinale de l'injecteur de carburant (12), et dans lequel
des ouvertures des trous d'injection supérieurs (32) de tous les ensembles de trous d'injection (32) sont disposées sur une même surface perpendiculaire à la direction de coulissement du piston (11), et des ouvertures des trous d'injection inférieurs (32) de tous les ensembles de trous d'injection (32) sont disposées sur une autre même surface perpendiculaire à une direction de coulissement du piston (11).

2. Moteur diesel à injection directe selon la revendication 1, dans lequel, dans chacun des ensembles de trous d'injection (32), le trou d'injection supérieur (32) et le trou d'injection inférieur (32) ont différents diamètres ou différentes quantités d'écoulement.

3. Moteur diesel à injection directe selon la revendication 1, dans lequel, dans chacun des ensembles de trous d'injection (32), le trou d'injection supérieur (32) et le trou d'injection inférieur (32) ont différents angles d'injection.

4. Moteur diesel à injection directe selon la revendication 1, dans lequel, dans chacun des ensembles de trous d'injection (32), le trou d'injection supérieur et le trou d'injection inférieur sont disposés parallèlement l'un à l'autre.

5. Moteur diesel à injection directe selon la revendication 1, dans lequel chacun des trous d'injection (32) de l'injecteur de carburant (12) est formé dans une tolérance de production.

6. Moteur diesel à injection directe selon la revendication 1, dans lequel la forme polygonale de l'ouverture de chambre de combustion (51) est hexagonale.

7. Moteur diesel à injection directe selon la revendication 1 ou 6, dans lequel un coin de la forme polygonale de l'ouverture de chambre de combustion (51), où des côtés de la forme polygonale se coupent les uns les autres, est formé dans une forme optionnelle.

8. Moteur diesel à injection directe selon la revendication 1 ou 6, dans lequel la forme polygonale de l'ouverture de chambre de combustion (51) est équilatérale.

9. Moteur diesel à injection directe selon la revendication 1 ou 6, dans lequel un centre de l'ouverture de chambre de combustion (51) coïncide avec un centre de la chambre de combustion (21).

10. Moteur diesel à injection directe selon la revendication 1 ou 6, dans lequel tous les côtés de la forme polygonale de l'ouverture de chambre de combustion (51) touchent un cercle ou une ellipse.

11. Moteur diesel à injection directe selon la revendication 1 ou 6, dans lequel au moins un des côtés de la forme polygonale de l'ouverture de chambre de combustion (51) n'a aucun côté parallèle à celle-ci.

12. Moteur diesel à injection directe selon la revendication 1 ou 6, dans lequel une pointe de l'injecteur de carburant (12) est dirigée vers un centre de la chambre de combustion (21).

13. Moteur diesel à injection directe selon la revendication 1 ou 6, dans lequel la forme polygonale de l'ouverture de chambre de combustion (51) est inéquilatérale.

14. Moteur diesel à injection directe selon la revendication 1 ou 6, dans lequel un centre de l'ouverture de chambre de combustion (51) est décalé d'un centre de la chambre de combustion (21).

15. Moteur diesel à injection directe selon la revendication 1 ou 6, dans lequel une entaille de forme optionnelle (55) est prévue sur chaque côté de l'ouverture de chambre de combustion polygonale (51).

16. Moteur diesel à injection directe selon la revendication 6, dans lequel une entaille de forme optionnelle (56) est prévue à chaque coin de l'ouverture de chambre de combustion polygonale (51).

17. Moteur diesel à injection directe selon la revendication 3, dans lequel, dans chacun des ensembles de trous d'injection (32), les angles des trous d'injection supérieurs et inférieurs (32) sont réglés de manière à élargir un espace entre des ouvertures des trous d'injection supérieurs et inférieurs (32).

18. Moteur diesel à injection directe selon la revendication 3, dans lequel, dans chacun des ensembles de trous d'injection (32), les angles des trous d'injection supérieurs et inférieurs (32) sont réglés de manière à rétrécir un espace entre des ouvertures des trous d'injection supérieurs et inférieurs (32).
